# EUROPEAN PATENT SPECIFICATION

(11) **EP 4 130 961 B1**
(45) Date of publication and mention of the grant of the patent: **14.10.2026**
(21) Application number: 21797881.6
(22) Date of filing: 26.04.2021
(51) Int. Cl.: G06F 3/04842

(54) **SHAPE SELECTION METHOD, ELECTRONIC DEVICE, STORAGE MEDIUM AND COMPUTER PROGRAM**
ORMAUSWAHLVERFAHREN, ELEKTRONISCHE VORRICHTUNG, SPEICHERMEDIUM UND COMPUTERPROGRAMM
PROCÉDÉ DE SÉLECTION DE FORME, DISPOSITIF ÉLECTRONIQUE, SUPPORT DE STOCKAGE ET PROGRAMME D'ORDINATEUR

(30) Priority: 29.04.2020 CN 202010356279
(43) Date of publication of application: 08.02.2023
(73) Proprietor: Hangzhou Hikvision Digital Technology Co., Ltd., Hangzhou, Zhejiang 310051 (CN)
(72) Inventor: CHEN, Junwei, Hangzhou, Zhejiang 310051 (CN)
(74) Representative: Vogelbruch, Keang
(86) International application number: PCT/CN2021/090027
(87) International publication number: WO 2021/218934

(56) References cited:
- EP-A1- 2 690 538
- EP-A2- 0 203 324
- CN-A- 1 331 815
- CN-A- 102 117 143
- CN-A- 103 294 236
- CN-A- 107 291 317
- CN-A- 111 552 429
- US-A1- 2011 063 511
- US-A1- 2013 339 883
- US-A1- 2018 157 372

## Description

### TECHNICAL FIELD

The present application relates to an image processing field, and in particular to a method of selecting graphic on a display interface, an electronic device, a storage medium and a computer program.

### BACKGROUND

The existing electronic device can generally provide a user with an interactive display interface, and the display interface can display graphics for the user. The user can select one or more graphics displayed in the display interface through a mouse and operations such as touching. The electronic device can determine a graphic selected by the user, and display the selected graphic to the user.

However, in a case that there are a plurality of graphics in the display interface, when the user triggers a selecting operation, it may be difficult for the electronic device to determine which graphic is selected by the user. For example, in a case that the plurality of graphics in the display interface overlap with each other, it is difficult for the electronic device to determine the graphic selected by the user from the overlapped graphics.

US 20130339883A1 discloses that upon receiving an input comprising an area of a user interface, a user interface element associated with the area of the user interface may be identified and a polygon-based representation of the at least one user interface element may be created. If the input is determined to comprise a selection of the user interface element according to the polygon-based representation, an operation associated with the user interface element may be performed.

US 20180157372A1 discloses a program for causing an electronic device having a display unit and a contact-type position input unit to execute displaying a screen including objects associated with events on the display unit; detecting, in the case where a touch on the contact-type position input unit is detected and two or more objects are located within a predetermined distance from the detected touched coordinates; selecting candidate objects in the case where the touch is detected, the candidate objects being the two or more objects located within the predetermined distance from the detected touched coordinates; determining weights relating to the occurrence of individual candidate events, the candidate events being events associated with the individual selected candidate objects, on the basis of the candidate events, a sequence of events executed immediately before, and event history information; and executing or presenting the candidate event having the highest weight.

US 20110063511A1 discloses a system and method in a television controller (e.g., a device with television remote control capability) for providing for user selection of objects in a television program.

Therefore, how to determine the graphic selected by the user from the display interface has become an urgent problem to be solved.

### SUMMARY

In view of this, the present application provides a method and apparatus, an electronic device for graphic selecting, which are used to determine graphic(s) selected by the user in the display interface. The invention is set out in the appended set of claims.

Specifically, the application is achieved through the following technical solutions.

According to a first aspect of the present application, a graphic selecting method is provided as defined in appended claim 1.

According to a second aspect of the present application, an electronic device is provided as defined in appended claim 11.

According to a third aspect of the present application, a computer readable storage medium is provided as defined in appended claim 12.

According to a fourth aspect of the present application, a computer program is provided as defined in appended claim 13.

As can be seen from the above descriptions, the electronic device can calculate one or more selected weights of one or more candidate graphics corresponding to the triggering position, and determine a graphic needed by the user based on the one or more selected weights of the one or more candidate graphics, therefore, graphic automatic selection can be realized.

### BRIEF DESCRIPTION OF THE DRAWINGS

FIG. 1 is a flow chart illustrating a graphic selecting method according to an exemplary embodiment of the present application;
FIG. 2 is a schematic diagram illustrating a display interface according to an exemplary embodiment of the present application;
FIG. 3 is a schematic diagram illustrating another display interface according to an exemplary embodiment of the present application;
FIG. 4 is a flow chart illustrating another graphic selecting method according to an exemplary embodiment of the present application;
FIG. 5a is a schematic diagram illustrating another display interface according to an exemplary embodiment of the present application;
FIG. 5b is a schematic diagram illustrating another display interface according to an exemplary embodiment of the present application;
FIG. 6 is a hardware structure diagram illustrating an electronic device according to an exemplary embodiment of the present application; and
FIG. 7 is a block diagram illustrating a graphic selecting apparatus according to an exemplary embodiment of the present application.

### DETAILED DESCRIPTION OF THE EMBODIMENTS

Examples will be described in detail herein, with the illustrations thereof represented in the drawings. When the following descriptions involve the drawings, like numerals in different drawings refer to like or similar elements unless otherwise indicated. The embodiments described in the following examples do not represent all embodiments consistent with the present application. Rather, they are merely examples of apparatuses and methods consistent with some aspects of the present application as detailed in the appended claims.

The terms used in the present application are for the purpose of describing particular examples only, and are not intended to limit the present application. Terms determined by "a", "the" and "said" in their singular forms in the present application and the appended claims are also intended to include plurality, unless clearly indicated otherwise in the context.

It should be understood that although terms like first, second, third, etc. may be used to describe various information in this application, the information should not be limited to these terms. These terms are only used to distinguish the same type of information from each other. For example, without departing from the scope of the present application, first information may also be referred to as second information, and similarly, second information may also be referred to as first information. Depending on the context, the word "if" as used herein may be interpreted as "when" or "upon" or "in response to determining".

In a traditional graphic selecting manner, in a case that an electronic device detects a triggering event for triggering graphic selection, the electronic device can usually present graphics at a triggering position corresponding to the triggering event to a user in turn. The user can determine whether the presented graphic is the one selected by the user.

For example, a user can draw three overlapped graphics with a drawing software (such as a drawing tablet), which are a square, a triangle and a circle respectively. The user may want to select the circle for the next step. At this point, the user may initiate a triggering event for triggering graphic selection. In existing graphic selection manners, an electronic device where the drawing software is installed can present the square to the user, and ask the user to determine whether the square is the graphic that the user wants to select, and then present the triangle to the user, and ask the user to determine whether the triangle is the graphic that the user wants to select. The circle may be then presented to the user, and the user is asked to determine whether the circle is the graphic that the user wants to select.

This graphic selecting manner needs user participation, which is inconvenient for a user to operate, and also reduces the efficiency of graphic selecting.

In view of this, the present application intends to propose a graphic selecting method, which can improve the efficiency of determining a selected graphic.

Specifically, an electronic device can select, according to a triggering event for triggering graphic selection, one or more corresponding candidate graphics from a display interface. The electronic device can determine selected weight(s) of the one or more candidate graphics, and select at least one as target graphic(s) according to the selected weight(s) of the candidate graphic(s). A selected weight can be calculated by the electronic device based on a graphic type and/or position of a candidate graphic, and can represent a predicted probability that the candidate graphic is the graphic needed by the user. Specific calculation manners for the selected weight will be described in detail below.

Since the electronic device can calculate the selected weight(s) of the one or more candidate graphics corresponding to the triggering event, and determine the graphic needed by the user based on the selected weights of the candidate graphics, graphic selection can be realized. In addition, in the graphic selecting method provided by the present application, the electronic device can automatically select a graphic based on a triggering event, which can effectively reduce user participation, thereby improving the graphic selecting efficiency and facilitating the user's operations.

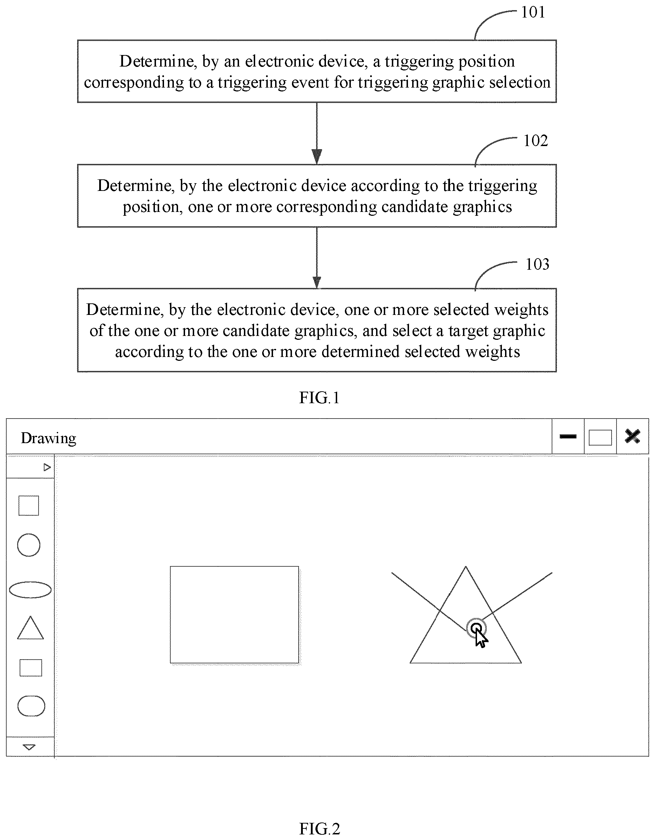

Referring to FIG. 1, FIG. 1 is a flow chart illustrating a graphic selecting method according to an exemplary embodiment of the present application. The method is applied to an electronic device and includes the following steps.

The electronic device may include: a computer, a user terminal, a server and other electronics equipment, which is not specifically limited here. The user terminal may include a mobile phone, an IPAD, a notebook and other terminal equipment used by a user, which is not specifically limited here.

At step 101, the electronic device can determine a triggering position corresponding to a triggering event for triggering graphic selection.

At step 102, the electronic device can determine, according to the triggering position, one or more corresponding candidate graphics.

At step 103, the electronic device can determine one or more selected weights of the one or more candidate graphics, and select a target graphic according to the one or more determined selected weights.

Since the electronic device can calculate the selected weights of the candidate graphics corresponding to the triggering position, and determine the graphic needed by a user based on the selected weights of the candidate graphics, graphic selection can be realized. In addition, in the graphic selecting method provided by the present application, the electronic device can automatically select a graphic based on a triggering event, which can effectively reduce user participation, thereby improving the graphic selecting efficiency and facilitating the user's operations.

In step 101, the electronic device can determine a triggering position corresponding to a triggering event for triggering graphic selection.

In implementation, in a case that a user is to select a graphic on a display, the user usually can click the graphic on the display through a mouse. When the electronic device detects the user's clicking operation, the electronic device acquires a triggering event corresponding to the clicking operation. For example, the electronic device may generate a triggering event corresponding to the clicking operation, or the user's clicking operation may indicate a triggering event, and the electronic device may acquire the triggering event input by the user. Manners of generating a triggering event are merely described as an example here, which are not specifically limited.

The electronic device can select, according to the triggering event, one or more corresponding candidate graphics from the display interface.

Optionally, while selecting, the triggering event usually may carry indication information for indicating the triggering position (for example, a coordinate of the triggering position on the display interface and the like). The electronic device can determine, according to the indication information, a triggering position corresponding to the triggering event on the display interface, and select one or more candidate graphics from all graphics displayed in the display interface according to the triggering position.

The triggering position can refer to a position where the user operates on the display screen through clicking, touching or the like. For example, a user triggers a graphic selection function and clicks a position on the screen, the clicked position can be the triggering position. This is only an exemplary description of the triggering position and does not specifically limit the triggering position.

In step 102, the electronic device can determine, according to the triggering position, one or more corresponding candidate graphics.

In practical applications, while selecting a graphic, a user's usual operating habit is to place the triggering position for an operation as close as possible to the graphic he/she wants to select, for example, to an edge, an end point and the like of the graphic. Therefore, to obtain the graphic desired by the user based on the user's usual operating habit as well as to reduce the computation amount of the device, the electronic device can select, according to the triggering position, one or more candidate graphics from all graphics displayed on the display interface, and select a target graphic needed by the user from the candidate graphics.

For selecting one or more candidate graphics from all graphics displayed on the display interface according to the triggering position, the electronic device can select, from all graphics displayed on the display interface, one or more candidate graphics at which the triggering position is located.

Since a closed graphic and a non-closed graphic have different graphic constructions, for selecting the one or more candidate graphics at which the triggering position is located, the selection can be made according to respective selecting ways corresponding to a closed graphic and a non-closed graphic.

In implementation, for a closed graphic on the display interface, the electronic device can determine, in a case that the triggering position meets any one of being inside the closed graphic, on a line or at an end point of the closed graphic, that the closed graphic is a candidate graphic. For a non-closed graphic on the display interface, in a case that the triggering position meets being on a line or at an end point of the non-closed graphic, the non-closed graphic is determined as a candidate graphic.

Specifically, in a first way of determining a candidate graphic, it is assumed that the electronic device only supports drawing closed graphics. For a graphic on the display interface, the electronic device can determine, in a case that the triggering position meets any one of being inside the closed graphic, on a line or at an end point of the closed graphic, that the closed graphic is a candidate graphic.

In a second way of determining a candidate graphic, it is assumed that the electronic device only supports drawing non-closed graphics. For a graphic on the display interface, the electronic device can determine, in a case that the triggering position meets being on a line or at an end point of the non-closed graphic, that the non-closed graphic is a candidate graphic.

In a third way of determining a candidate graphic, it is assumed that the electronic device supports drawing both closed graphics and non-closed graphics. For a graphic on the display interface, in a case that the graphic is a closed graphic, the electronic device can determine, in response to determining that the triggering position meets any one of being inside the closed graphic, on a line or at an end point of the closed graphic, that the closed graphic is a candidate graphic. In a case that the graphic is a non-closed graphic, the electronic device can determine, in response to determining that the triggering position meets being on a line or at an end point of the non-closed graphic, that the non-closed graphic is a candidate graphic.

The third way of determining a candidate graphic is described below with specific examples. For the first and second ways of determining a candidate graphic, references may be made to the description in this example, which are not repeated here.

For example, as shown in FIG. 2, the display interface currently can include a polyline, a triangle and a rectangle. It is assumed that the triggering position is a position indicated by the arrow with the circle shown in FIG. 2.

For the rectangle, the electronic device can determine whether the graphic is a closed graphic. In the present example, since the rectangle is a closed graphic, the electronic device can determine whether the triggering position is at a vertex of the rectangle, on a line of the rectangle or inside the rectangle. In the present example, since the triggering position is neither at a vertex, on a line of the rectangle nor inside the rectangle, the triggering position does not relate to the rectangle and the electronic device does not take the rectangle as a candidate graphic.

For the polyline, the electronic device can determine whether the graphic is a closed graph. In the present example, since the polyline is a non-closed graphic, the electronic device can determine whether the triggering position is on a line of the polyline or at a vertex of the polyline. In the present example, since the triggering position is on a line of the polyline, it is determined that the triggering position is on the polyline, and the electronic device can determine that the polyline is a candidate graphic.

For the triangle, the electronic device can determine whether the graphic is a closed graphic. In the present example, since the triangle is a closed graphic, the electronic device can determine whether the triggering position is at a vertex of the triangle, on a line of the triangle or inside the triangle. In the present example, since the triggering position is inside the triangle, it is determined that the triggering position is on the triangle, and the electronic device can determine that the triangle is a candidate graphic.

The above are descriptions with respect to step 102.

In step 103, the electronic device determines one or more selected weights of the one or more candidate graphics, and selects one or more target graphics according to the determined selected weights. Several implementations of step 103 are described below.
A first implementation of step 103

The electronic device determines a selected weight of each candidate graphic, determine that at least one candidate graphic is target graphic(s) according to the selected weights of the candidate graphics, and select the target graphic(s).

For "determining that at least one candidate graphic is target graphic(s) according to the selected weights of the candidate graphics, and select the target graphic(s)", implementations are described below.

In implementation, the electronic device selects, according to creation times and/or areas of candidate graphics with a greatest selected weight, a candidate graphic from candidate graphics with the largest selected weight as the target graphic. The target graphic may be the graphic needed by a user.

Optionally, in response to determining that there is one candidate graphic with the largest selected weight, the electronic device may directly take the candidate graphic with the largest selected weight as the target graphic.

In response to determining that there are a plurality of candidate graphics with the largest selected weight, the electronic device may determine the target graphic in the following manner.

Manner 1: according to the user's operating habit, the later the graphic is created by a user, the higher the probability of being selected by the user. Therefore, in response to determining that there are a plurality of candidate graphics with the largest selected weight, the electronic device can further select, from the selected candidate graphics with the largest selected weight, a candidate graphic whose creation time is closest to the current time as the target graphic.

For that "the electronic device can further select, from the selected candidate graphics with the largest selected weight, a candidate graphic whose creation time is closest to the current time as the target graphic", implementations are described below.

When a graphic is created each time, the electronic device can assign a graphic ID (Identity) to the graphic in a way of increasing ID. That is, the earlier the graphic is created, the smaller the graphic ID, and the later the graphic is created, the larger the graphic ID.

Therefore, while selecting, from the selected candidate graphics with the largest selected weight, a candidate graphic whose creation time is closest to the current time as the target graphic, the electronic device may select a graphic with the largest graphic ID as the target graphic.

Alternatively, each time a graphic is created, the electronic device can record a creation time of the graphic. The electronic device may take a graphic whose creation time is closest to the current moment as the target graphic.

In practical applications, other manners can be further used to select a candidate graphic whose creation time is closest to the current time. For "selecting a candidate graphic whose creation time is closest to the current time", example descriptions are made here, which is not specifically limited.

In addition, in practical applications, this manner 1 can be used in any one of cases that the electronic device only supports drawing non-closed graphics, only supports drawing closed graphics, and supports drawing both non-closed graphics and closed graphics. Scenarios to which manner 1 applies are only exemplarily described here, which are not specifically limited.

Manner 2: according to user habits, in a case that a triggering position is on a plurality of graphics, the smaller a graphic's area, the higher the probability that the graphic is selected by a user, and the later a graphic is created by a user, the higher the probability that the graphic is selected by the user. Therefore, in response to determining that there are a plurality of candidate graphics with the largest selected weight, the electronic device can refer to areas and creation times of the candidate graphics to determine the target graphic.

In a case that the number of selected candidate graphics with the largest selected weight is greater than 1, whether the candidate graphics with the largest selected weight are closed graphics of the same type can be determined. Types of graphics may include: a triangle, a circle, a rectangle, a square and the like. The types of graphics are only exemplarily described here, and are not specifically limited.
1) In a case that the candidate graphics with the largest selected weight are all closed graphics of the same type, from the candidate graphics with the largest selected weight, the electronic device selects a candidate graphic with the smallest area as the target graphic. For example, assuming that there are two candidate graphics with the largest selected weight, namely rectangle 1 and rectangle 2, an area of the rectangle 1 is 100 and an area of the rectangle 2 is 80. The electronic device can select the rectangle 2 as the target graphic.
2) In a case that the candidate graphics with the largest selected weight are not closed graphics of the same type, from the candidate graphics with the largest selected weight, a candidate graphic whose creation time is closest to the current time is selected as the target graphic.

That the candidate graphics with the largest selected weight are not all closed graphics (for example, there are 3 candidate graphics with the largest selected weight, namely rectangle 1, rectangle 2 and polyline 1), and that the candidate graphics with the largest selected weight are not of the same type (for example, there are 3 candidate graphics with the largest selected weight, namely rectangle 1, rectangle 2 and triangle 1), can be both classified as the case that "the candidate graphics with the largest selected weight are not closed graphics of the same type". In this case, the electronic device may select, among the candidate graphics with the largest selected weight, a candidate graphic whose creation time is closest to the current time as the target graphic.

The manner of selecting a candidate graphic whose creation time is closest to the current time can be referred to the above, and will not be repeated here.

In practical applications, this manner 2 can be used in any one of cases that the electronic device only supports drawing non-closed graphics, only supports drawing closed graphics, and supports drawing both non-closed graphics and closed graphics. Scenarios to which manner 2 applies are only exemplarily described here, which are not specifically limited.

Manner 3: according to user habits, in a case that a triggering position is on a plurality of graphics, the smaller a graphic's area, the higher the probability that the graphic is selected by a user. Therefore, the electronic device can determine the target graphic according to areas of the candidate graphics.

In a case that the number of selected candidate graphics with the largest selected weight is greater than 1, whether the candidate graphics with the largest selected weight are closed graphics can be determined. Types of graphics may include: a triangle, a circle, a square, a rectangle and the like. The types of graphics are only exemplarily described here, and are not specifically limited.
1) In a case that the candidate graphics with the largest selected weight are all closed graphics, the electronic device selects, among the candidate graphics with the largest selected weight, a candidate graphic with the smallest area as the target graphic.
2) In a case that the candidate graphics with the largest selected weight include a non-closed graphic, among the candidate graphics with the largest selected weight, a candidate graphic whose creation time is closest to the current time is selected as the target graphic.

In practical applications, this manner 3 can be used in any one of cases that the electronic device only supports drawing non-closed graphics, only supports drawing closed graphics, and supports drawing both non-closed graphics and closed graphics. Scenarios to which manner 3 applies are only exemplarily described here, which are not specifically limited.

Certainly, the manner of how the electronic device determines the target graphic in a case that there are a plurality of candidate graphics with the largest selected weight is only introduced here exemplarily. In practical applications, the electronic device can also use other manners to determine, which is not specifically limited here.
A second implementation of step 103 not covered by the claims.

The electronic device can also determine a selected weight of any candidate graphic, and in response to determining that the selected weight of the candidate graphic meets a predetermined weight condition, take the candidate graphic as the target graphic, and select the target graphic.

Optionally, in a case that the selected weight of the candidate graphic fails to meet the predetermined weight condition, the electronic device can further obtain another candidate graphic for which a selected weight is to be determined, and determine the selected weight of the obtained candidate graphic. In a case that the selected weight of the candidate graphic meets the predetermined weight condition, the candidate graphic can be taken as the target graphic. In a case that the selected weight of the candidate graphic fails to meet the predetermined weight condition, the above process can be performed again, until the target graphic is selected.

The predetermined weight condition may include: the selected weight is greater than or equal to a predetermined threshold and the like. The predetermined weight condition is only exemplarily described here, and is not specifically limited.

In the following, the manner of "determining one or more selected weights of the one or more candidate graphics" in step 103 is described.

In practical applications, while selecting a graphic, the user's usual operating habit is to place a triggering position for an operation as close as possible to an edge or an end point of the graphic he/she wants to select, and natural properties of graphics (for example, types of graphics and the like) vary from type to type. Therefore, a selected weight of a graphic can be affected by a relative position relationship between the triggering position and the graphic, and/or a type of the graphic.

Therefore, in an embodiment of the present application, the position relationship between the triggering position and the graphic, and/or the type of graphic can be taken as reference information, and the selected weight of the graphic can be determined according to the reference information. Since the reference information for the selected weight of the graphic is related to the user's operating habit and the natural properties of graphics, the target graphic needed by the user determined with this reference information is more accurate.

In implementation, the electronic device can determine, for any candidate graphic, a selected weight of the candidate graphic according to a graphic weight and/or a position weight of the candidate graphic. The graphic weight can be determined according to a graphic type of the candidate graphic. The position weight can be determined according to a position relationship between the candidate graphic and the triggering position.

In a first way, the electronic device may determine, only based on a graphic weight of a candidate graphic, a selected weight of the candidate graphic.

While determining, the electronic device may directly take the graphic weight of the candidate graphic as the selected weight of the candidate graphic. Certainly, the electronic device may also process the graphic weight of the candidate graphic to obtain the selected weight of the candidate graphic. For example, the electronic device may multiply the graphic weight of the candidate graphic by a predetermined coefficient, to obtain the selected weight of the candidate graphic. Alternately, the electronic device may add the graphic weight of the candidate graphic to a predetermined constant value to obtain the selected weight of the candidate graphic, which is not specifically limited here.

In a second way, the electronic device may determine, only based on a position weight of a candidate graphic, a selected weight of the candidate graphic.

While determining, the electronic device may directly use the position weight of the candidate graphic as the selected weight of the candidate graphic. Certainly, the electronic device may also process the position weight of the candidate graphic to obtain the selected weight of the candidate graphic. For example, the electronic device may multiply the position weight of the candidate graphic by a predetermined coefficient to obtain the selected weight of the candidate graphic. Alternately, the electronic device may add the position weight of the candidate graphic to a predetermined constant value to obtain the selected weight of the candidate graphic, which is not specifically limited here.

In a third way, the electronic device may determine, according to a graphic weight and a position weight of a candidate graphic, a selected weight of the candidate graphic.

While calculating the selected weight, the electronic device may add the graphic weight to the position weight to determine the selected weight. Alternatively, the electronic device may perform a summation and average operation on the graphic weight and the position weight to obtain the selected weight. For determining the selected weight of the candidate graphic according to the graphic weight and the determined position weight, descriptions are merely illustrative, which is not specifically limited.

### 1) Ways of determining a graphic weight

In the present application, a correspondence between graphic types and graphic weights can be pre-configured. For example, the correspondence between graphic types and graphic weights is shown in Table 1.

**Table 1**

| Graphic type | Graphic weight |
|---|---|
| Rectangle | 100 |
| Triangle | 100 |
| Polyline | 150 |

It should be noted that the predetermined correspondence between graphic types and graphic weights can be pre-configured by developers. In practical applications, in a case that a user is to select a point or a line, a user's usual operating habit is to place a triggering position for an operation as close as possible to the point or line he/she wants to select. While selecting a closed graphic, a user's usual habit is to place a triggering position on a boundary of the closed graphic or inside the closed graphic. Therefore, according to the user's operating habits for graphic selecting, in the pre-configuration, the developers can configure, based on the user's operating habits, the highest graphic weight for points, the second highest graphic weight for lines and the lowest graphic weight for closed graphics. In this way, the pre-configured graphic weights are related to the user's operating habits, thereby improving the accuracy of graphic selection.

Certainly, for closed graphics, the developers may configure different weights for graphics of different types, or configure the same weight for graphics of different types. Alternatively, the developers may also configure graphic weights according to areas of closed graphics. Example descriptions are provided herein, which do not constitute specifically limit.

Certainly, in practical applications, the electronic device may automatically configure graphics weights for various types of graphics, or automatically update the graphics weights for various types of graphics as well. For example, the electronic device can establish or update the correspondence between graphic types and graphic weights according to user's historical graphic selection records.

For example, the electronic device can periodically count, for each of various graphic types, the number of times of the graphic type selected by the user in the present period, and determine a correspondence between graphic types and graphic weights according to the numbers of times of various graphic types. For example, the larger the counted number of times for a graphic type, the larger the graphic weight corresponding to the graphic type, and the smaller the counted number of times for a graphic type, the smaller the graphic weight corresponding to the graphic type.

The process of generating the correspondence between graphic types and graphic weights is only exemplarily described, and is not specifically limited.

In the embodiments of the present application, for determining a graphic weight of a candidate graphic according to a graphic type of the candidate graphic, the electronic device can determine, in the predetermined correspondence between graphic types and graphic weights, a graphic weight corresponding to the graphic type of the candidate graphic.

### 2) Ways of determining a position weight

The position relationship between candidate graphics and triggering positions may include a triggering position is on a line of a candidate graphic, a triggering position is at an end point of a candidate graphic, and a triggering position is within a graphic region of a candidate graphic. Certainly, this is only an example description of the position relationship between candidate graphics and triggering positions. In practical applications, other position relationships may also be included, and the position relationship is not specifically limited here.

It should be noted that, for a line of a graphic, in a case that the graphic is a non-closed graphic, the line of the graphic may be a line on the non-closed graphic. For example, a non-closed graphic is a polyline, and the line can be one of straight lines that constitute the non-closed graphic. In a case that the non-closed graphic is a curve, the line can be one segment of the curve constituting the non-closed graphic.

In a case that the graphic is a closed graphic, the line of the graphic may be an edge of the closed graphic.

In an embodiment of the present application, different position relationships correspond to different ways of determining the position weight.
1) In a case that the position relationship indicates that the triggering position is on a line of the candidate graphic, or in a case that the position relationship indicates that the triggering position is at an end point of the candidate graphic, a way of determining the position weight of the candidate graphic can be as follows.

In the present application, a correspondence between graphics (including closed graphics and non-closed graphics) and position weights can be pre-configured. For example, the correspondence between graphics and position weights is shown in Table 2.

**Table 2**

| Graphic | Position weight |
|---|---|
| End point | 102 |
| Line | 100 |

It should be noted that the predetermined correspondence between graphics and position weights can be pre-configured by developers.

In practical applications, according to a user habit, while selecting a graphic, the user is more likely to set a triggering position at an end point of the graphic that the user wants to select, rather than placing the triggering position on a line of the graphic. Therefore, based on the habit, the developers can set a position weight associated with an end point to be larger, and set a position weight associated with a line to be smaller.

Certainly, this is only an exemplary description. In practical applications, the electronic device may periodically perform counting on user's historical graphic selection records, and periodically establish or update the correspondence between graphics and position weights.

For example, the electronic device can periodically count the number of times (a first number of times) that a triggering position for a user's operation is at an end point of a graphic needed by the user, and the number of times (a second number of times) that the triggering position for the user's operation is on a line of the graphic needed by the user. According to the counted first number of times and second number of times, position weights corresponding to an end point and a line can be determined. For example, in a case that the first number of times is greater than the second number of times, the position weight of an end point can be set to be greater than the position weight of a line. In a case that the first number of times is less than the second number of times, the position weight of an end point can be set to be smaller than the position weight of a line.

In the embodiments of the present application, in response to determining that the position relationship indicates that the triggering position is on a line of the candidate graphic, the electronic device can determine, in the predetermined correspondence between graphics and position weights, that a position weight corresponding to a line is the position weight of the candidate graphic. In response to determining that the position relationship indicates that the triggering position is at an end point of the candidate graphic, the electronic device can determine, in the predetermined correspondence between graphics and position weights, that a position weight corresponding to an end point is the position weight of the candidate graphic.

2) In a case that the position relationship indicates that the triggering position is within a graphic region of the candidate graphic, the electronic device can determine the position weight of the candidate graphic in the following manner.

The electronic device can calculate a shortest straight-line distance from the triggering position to a target edge of the candidate graphic, where the target edge is an edge of the candidate graphic closest to the triggering position.

The electronic device can determine, according to the graphic weight and the determined shortest straight-line distance, the position weight of the candidate graphic.

For example, the electronic device may determine a position weight of a graphic according to the following formula. $S = \frac{P}{L}$

S can represent a position weight of a candidate graphic, P can represent a graphic weight of the candidate graphic, and L can represent a shortest straight-line distance from a triggering position to a target edge of the candidate graphic.

Certainly, in practical applications, for determining, according to the graphic weight and the shortest straight-line distance, the position weight of the candidate graphic, the electronic device can also use other calculation manners, as long as meeting that the smaller the calculated shortest straight-line distance, the greater the position weight of the graphic. For determining the position weight of the candidate graphic, only an exemplary description is provided here, which is not specifically limited.

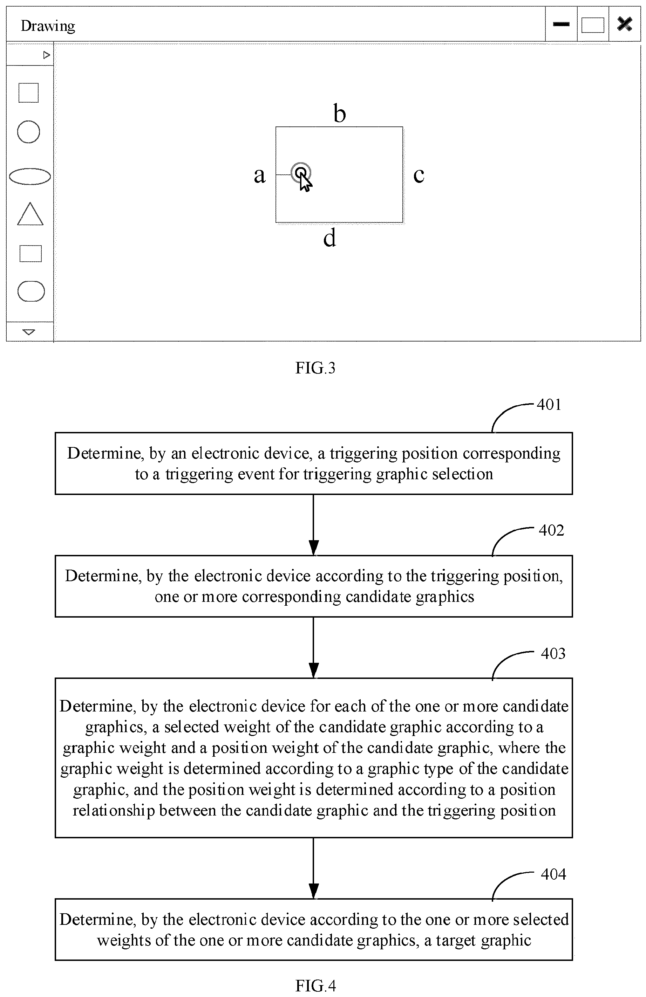

For example, as shown in FIG. 3, a triggering position can be a position indicated by the arrow in FIG. 3, a candidate graphic can be the rectangle in FIG. 3, and the triggering position can be in an inner region of the rectangle. A graphic weight corresponding to the rectangle can be assumed to be 100.

The triggering position is closest to edge a of the rectangle, so edge a of the rectangle can be the target edge.

The electronic device can calculate a shortest straight-line distance (assumed to be 100) from the triggering position to edge a of the rectangle.

While calculating a selected weight of the rectangle, the electronic device can determine, based on the graphic weight and the shortest straight-line distance, that is, through S=P/L=100/100=1, that the position weight of the rectangle is 1.

As can be seen from the above descriptions, on the one hand, since the electronic device can calculate one or more selected weights of one or more candidate graphics corresponding to the triggering event, and determine the graphic needed by the user based on the selected weights of the candidate graphics, graphics selection can be realized. In addition, in the graphic selecting method provided by the present application, the electronic device can automatically select a graphic based on the triggering event, which can effectively reduce user participation, thereby greatly improving the graphic selecting efficiency and facilitating the user's operations. On the other hand, while determining the one or more selected weights of the one or more candidate graphics, graphic types related to the user's operating habits and position relationships between the triggering position and graphics are combined, so the determined selected weight is closer to the user's operating habits and the determined selected weight is more accurate.

In practical applications, when the candidate graphics on the display interface are determined, the electronic device can also determine, according to the above-mentioned manner of determining a selected weight, one or more selected weights of the one or more candidate graphics, and set a selected weight of a non-candidate graphic to 0. The electronic device can select a target graphic according to selected weights of the candidate graphics and the non-candidate graphics.

For example, the electronic device can select, among the candidate graphics and the non-candidate graphics, graphic(s) with the largest selected weight as target graphic(s), which is not specifically limited here. When the target graphic is determined, the electronic device can further reset the selected weights of the candidate graphics to 0.

Referring to FIG. 4, FIG. 4 is a flow chart illustrating another graphic selecting method according to an exemplary embodiment of the present application. The method can be applied to an electronic device and can include steps shown below.

At step 401, the electronic device can determine a triggering position corresponding to a triggering event for triggering graphic selection.

Specific references may be made to step 101, which will not be repeated here.

At step 402, the electronic device can determine, according to the triggering position, one or more corresponding candidate graphics.

Specific references may be made to step 102, which will not be repeated here.

At step 403, the electronic device can determine, for each of the one or more candidate graphics, a selected weight of the candidate graphic according to a graphic weight and a position weight of the candidate graphic. The graphic weight can be determined according to a graphic type of the candidate graphic, and the position weight can be determined according to a position relationship between the candidate graphic and the triggering position.

In implementation, while determining the graphic weight of the candidate graphic, the electronic device can determine, in a predetermined correspondence between graphic types and graphic weights, a graphic weight corresponding to the graphic type of the candidate graphic.

While determining the position weight of the candidate graphic, in response to determining that the position relationship indicates that the triggering position is on a line of the candidate graphic, the electronic device can determine, in the predetermined correspondence between graphics and position weights, that a position weight corresponding to a line is the position weight of the candidate graphic.

In response to determining that the position relationship indicates that the triggering position is at an end point of the candidate graphic, the electronic device can determine, in the predetermined correspondence between graphics and position weights, that a position weight corresponding to an end point is the position weight of the candidate graphic.

In a case that the position relationship indicates that the triggering position is within a graphic region of the candidate graphic, the electronic device can calculate a shortest straight-line distance from the triggering position to a target edge of the candidate graphic, where the target edge is an edge of the candidate graphic that is closest to the triggering position. According to the graphic weight and the determined shortest straight-line distance, the position weight of the candidate graphic can be determined.

At step 404, the electronic device can select a target graphic according to the one or more selected weights of the one or more candidate graphics.

In implementation, in a case that there is one candidate graphic with the largest selected weight, the electronic device may directly take the candidate graphic with the largest selected weight as the target graphic.

In a case that there are a plurality of candidate graphics with the largest selected weight, the electronic device may select, among the selected candidate graphics with the largest selected weight, a candidate graphic whose creation time is closest to the current time as the target graphic.

Alternatively, in a case that there are a plurality of candidate graphics with the largest selected weight, the electronic device may determine whether the candidate graphics with the largest selected weight are closed graphics of the same type. In response to determining that the candidate graphics with the largest selected weight are closed graphics of the same type, among the candidate graphics with the largest selected weight, a candidate graphic with the smallest area can be selected as the target graphic. In response to determining that the candidate graphics with the largest selected weight are not all closed graphics of the same type, among the candidate graphics with the largest weight, a candidate graphic whose creation time is closest to the current time can be selected as the target graphic.

The graphic selecting method provided by the present application is described in detail below with specific examples.

For example, a predetermined correspondence between graphic types and graphic weights is shown in Table 3.

**Table 3**

| Graphic type | Graphic Weight |
|---|---|
| Rectangular | 100 |
| Triangle | 100 |

For example, a correspondence between graphics and position weights is shown in Table 4.

**Table 4**

| Graphic | Position Weight |
|---|---|
| End point | 101 |
| Line | 100 |

### Embodiment 1

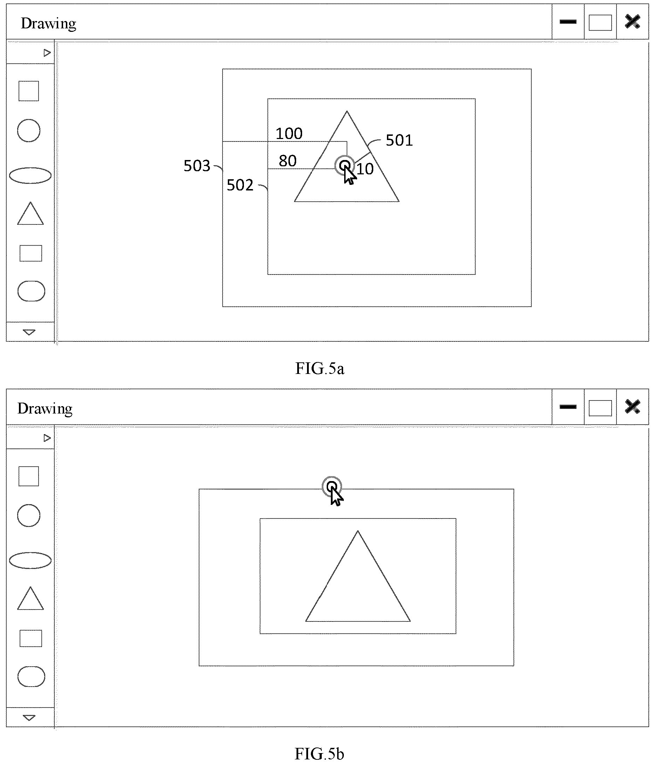

For example, as shown in FIG. 5a, three graphics can be included on an interface of the electronic device, which are a triangle, a small rectangle and a large rectangle. A triggering position is, for example, shown by the circle in FIG. 5a.

Firstly, when the electronic device detects a triggering event, the electronic device can determine one or more candidate graphics from graphics displayed on the display interface. In the present example, since the triggering position is inside all of the triangle, the small rectangle and the large rectangle, the determined candidate graphics can be the triangle, the small rectangle and the large rectangle.

For the triangle, the electronic device can determine a graphic weight (e.g., 100) of the triangle from the correspondence shown in Table 3.

In addition, the electronic device can further determine, according to the graphic weight and a position relationship between the triggering position and the triangle, a selected weight of the triangle. In the present example, the triggering position is within an inner area of the triangle, and the electronic device can calculate a shortest straight-line distance (e.g., 10) from the triggering position to an edge of the triangle (e.g., edge 501) that is closest to the triggering position. The electronic device can calculate a ratio (e.g., 10) of the graphic weight of the triangle (e.g., 100) to the shortest straight-line distance (e.g., 10). The electronic device can calculate a sum (e.g., 110) of the ratio and the graphic weight of the triangle (e.g., 100) as the selected weight of the triangle (e.g., 110).

For the small rectangle, the electronic device can determine a graphic weight (e.g., 100) of the small rectangle from the correspondence shown in Table 3.

In addition, the electronic device can further determine, according to the graphic weight and a position relationship between the triggering position and the small rectangle, a selected weight of the small rectangle. In the present example, the triggering position is within an inner area of the small rectangle, and the electronic device can calculate a shortest straight-line distance (e.g., 80) from the triggering position to an edge of the small rectangle (e.g., edge 502) that is closest to the triggering position. The electronic device can calculate a ratio (e.g., 1.25) of the graphic weight of the small rectangle (e.g., 100) to the shortest straight-line distance (e.g., 80), and calculate a sum (e.g., 101.25) of the ratio (e.g., 1.25) and the graphic weight of the small rectangle (e.g., 100) as a selected weight of the small rectangle (e.g., 101.25).

For the large rectangle, the electronic device can determine a graphic weight (e.g., 100) of the large rectangle from the correspondence shown in Table 3.

In addition, the electronic device can further determine, according to the graphic weight and a position relationship between the triggering position and the large rectangle, a selected weight of the large rectangle. In the present example, the triggering position is within an inner area of the large rectangle, and the electronic device can calculate a shortest straight-line distance (e.g., 100) from the triggering position to an edge of the large rectangle (e.g., edge 503) that is closest to the triggering position. The electronic device can calculate a ratio (e.g., 1) of the graphic weight of the large rectangle (e.g., 100) to the shortest straight-line distance (e.g., 100), and calculate a sum (e.g., 101) of the graphic weight of the large rectangle (e.g., 100) and the ratio (e.g., 1) as a selected weight of the large rectangle (e.g., 101).

When the selected weights of the three graphics are calculated, the electronic device can select a candidate graphic with the largest selected weight as a target graphic. In the present example, the selected weight of the triangle is 110, the selected weight of the small rectangle is 101.25, and the selected weight of the large rectangle is 101, so the electronic device can select the triangle as the target graphic.

### Embodiment 2

For example, as shown in FIG. 5b, three graphics can be included on an interface of the electronic device, which are a triangle, a small rectangle and a large rectangle. A triggering position is, for example, shown by the circle in FIG. 5b.

Firstly, when the electronic device detects a triggering event, the electronic device can determine one or more candidate graphics from graphics displayed on the display interface.

In the present example, for the triangle, the triggering position is neither inside the triangle nor at an end point and on a line of the triangle, so the electronic device can determine that the triangle is not a candidate graphic.

For the small rectangle, since the triggering position is neither inside the small rectangle, nor at an end point and on a line of the small rectangle, the electronic device can determine that the small rectangle is not a candidate graphic.

For the large rectangle, since the triggering position is on a line of the large rectangle, the electronic device can determine that the large rectangle is a candidate graphic.

The electronic device can determine a selected weight of the large rectangle.

The electronic device can determine a graphic weight (e.g., 100) of the large rectangle from the correspondence shown in Table 3.

In addition, the electronic device can further determine, according to the graphic weight and a position relationship between the triggering position and the large rectangle, a selected weight of the large rectangle. In the present example, the triggering position is on a line of the large rectangle, and the electronic device can search a position weight (e.g., 100) corresponding to edges of rectangle in the correspondence shown in Table 4. The electronic device can calculate a sum (e.g., 200) of the graphic weight (e.g., 100) of the large rectangle and the position weight (e.g., 100) as a selected weight of the large rectangle (e.g., 200).

The electronic device can select a candidate graphic with the largest selected weight as the target graphic. In the present example, the electronic device can select the large rectangle as the target graphic.

In addition, the present application further provides an electronic device. The electronic device can include a machine readable storage medium and a processor, where the machine readable storage medium is configured to store machine executable instructions. The processor is configured to read the machine executable instructions on the machine readable storage medium, and execute the instructions to implement the above-mentioned graphic selecting method.

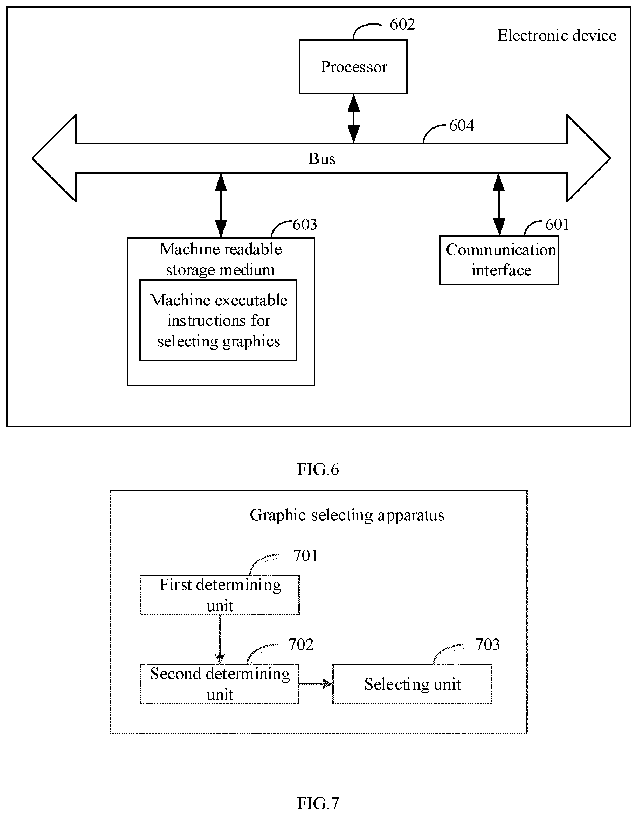

As shown in FIG. 6, in addition to the processor 602 and the machine readable storage medium 603, the electronic device may further include a communication interface 601 and a bus 604. The communication interface 601, the processor 602 and the machine readable storage medium 603 communicate with each other through the bus 604. By reading and executing the machine executable instructions corresponding to a graphic selecting control logic in the machine readable storage medium 603, the processor 602 can execute the graphic selecting method described above.

Referring to FIG. 7, FIG. 7 is a block diagram illustrating a graphic selecting apparatus according to an exemplary embodiment not covered by the claims. The apparatus can be applied to an electronic device and can include the following units.

A first determining unit 701, configured to determine a triggering position corresponding to a triggering event for triggering graphic selection.

A second determining unit 702, configured to determine, according to the triggering position, one or more corresponding candidate graphics.

A selecting unit 703, configured to determine one or more selected weights of the one or more candidate graphics and select a target graphic according to the one or more determined selected weights.

Optionally, for determining, according to the triggering position, the one or more corresponding candidate graphics, the second determining unit 702 is configured to at least one of: for a closed graphic, determine, in a case that the triggering position meets any one of being inside the closed graphic, on a line or at an end point of the closed graphic, that the closed graphic is a candidate graphic; or for a non-closed graphic, determine, in a case that the triggering position meets being on a line or at an end point of the non-closed graphic, that the non-closed graphic is a candidate graphic.

Optionally, for determining the one or more selected weights of the one or more candidate graphics, the selecting unit 703 is configured to: for any one of the one or more candidate graphics, determine a selected weight of the candidate graphic according to at least one of a graphic weight or a position weight of the candidate graphic; where the graphic weight is determined according to a graphic type of the candidate graphic, and the position weight is determined according to a position relationship between the candidate graphic and the triggering position.

Optionally, for determining the one or more selected weights of the one or more candidate graphics and the selecting the target graphic according to the one or more determined selected weights, the selecting unit 703 is configured to: determine, for each one of the one or more candidate graphics, a selected weight of the candidate graphic, determine, according to the selected weight of each candidate graphic, that at least one candidate graphic is the target graphic, and select the target graphic; or determine, for any one of the one or more candidate graphics, a selected weight of the candidate graphic, determine, in a case that the selected weight of the candidate graphic meets a predetermined weight condition, that the candidate graphic is the target graphic, and select the target graphic.

Optionally, for determining the one or more selected weights of the one or more candidate graphics, the selecting unit 703 is further configured to determine, for any one of the one or more candidate graphics, the position weight through one of: determining, in a case that the position relationship indicates that the triggering position is on a line of the candidate graphic, from a predetermined correspondence between graphics and position weights, that a position weight corresponding to the line of the candidate graphic is the position weight of the candidate graphic; determining, in a case that the position relationship indicates that the triggering position is at an end point of the candidate graphic, from the predetermined correspondence between graphics and position weights, that a position weight corresponding to the end point of the candidate graphic is the position weight of the candidate graphic; and calculating, in a case that the position relationship indicates that the triggering position is within a graphic region of the candidate graphic, a shortest straight-line distance from the triggering position to a target edge of the candidate graphic, where the target edge is an edge of the candidate graphic closest to the triggering position; and determining, according to the graphic weight and the shortest straight-line distance, the position weight of the candidate graphic.

Optionally, for determining, according to the selected weight of each candidate graphic, that the at least one candidate graphic is the target graphic, the selecting unit 703 is configured to: take, in response to determining that there is one candidate graphic with a largest weight, the candidate with the largest weight as the target graphic; or select, in response to determining that there are a plurality of candidate graphics with a largest selected weight, according to at least one of creation times or areas of the plurality of candidate graphics with the largest selected weight, one from the plurality of candidate graphics with the largest selected weight as the target graphic.

Optionally, for selecting, in response to determining that there are the plurality of candidate graphics with the largest selected weight, according to at least one of creation times or areas of the plurality of candidate graphics with the largest selected weight, one from the plurality of candidate graphics with the largest selected weight as the target graphic, the selecting unit 703 is configured to perform one of: selecting a candidate graphic with a creation time being closest to current time as the target graphic; selecting, in a case that the plurality of candidate graphics with the largest selected weight are closed graphics of a same type, a candidate graphic with a smallest area as the target graphic; and selecting, in a case that the plurality of candidate graphics with the largest selected weight are not closed graphics of the same type or include a non-closed graphic, a candidate graphic with a creation time being closest to the current time as the target graphic; and selecting, in a case that the plurality of candidate graphics with the largest selected weight are all closed graphics, a candidate graphic with a smallest area as the target graphic; and selecting, in a case that the plurality of candidate graphics with the largest selected weight include a non-closed graphic, a candidate graphic with a creation time being closest to the current time as the target graphic.

In addition, the present application further provides a computer readable storage medium, and the computer readable storage medium has a computer program stored thereon. The computer program can be executed by a processor to implement the above-mentioned graphic selecting method.

A machine readable storage medium referred to herein may be any electronic, magnetic, optical, or other physical storage device that can contain or store information, such as executable instructions, data, and the like. For example, the machine readable storage medium may be: a volatile memory, a non-transitory memory, or a similar storage medium. Specifically, the machine readable storage medium may be Random Access Memory (RAM), flash memory, storage drive (for example, hard disk drive), solid-state drive, any type of storage disk (such as an optical disc, DVD, etc.), or similar storage medium or a combination thereof.

In addition, the present application further provides a computer program, the computer program is stored in a machine readable storage medium, and when the computer program is executed by a processor, the processor is caused to implement the above-mentioned graphic selecting method.

The implementation process of functions and roles of each unit in the above-mentioned device is detailed in the implementation process of corresponding steps in the above-mentioned method, and will not be repeated here.

For apparatus embodiments, since the apparatuses are basically similar to method embodiments, reference may be made to some of the description of the method embodiment. The apparatus embodiments described above are merely schematic, in which the units described as separate components may or may not be physically separated, and components displayed as units may or may not be physical units, that is, may be located in the same place, or may be distributed on a plurality of network units. Part or all of the modules may be selected according to actual requirements to implement the objectives of the solutions in the embodiments. Those of ordinary skill in the art can understand and implement without creative work.

The above descriptions are preferred embodiments provided by the present application, which are not intended to limit the present application.

## Claims

1. A method of selecting graphic on a display interface, performed by an electronic device, comprising:
in response to detecting a triggering event, determining (101) a triggering position corresponding to the triggering event for triggering graphic selection; wherein the triggering event comprises a click operation performed by a user on the display interface of the electronic device through a mouse;
determining (102), according to the triggering position, one or more corresponding candidate graphics;
determining (103) one or more selected weights of the one or more candidate graphics; and
selecting (103) a target graphic according to the one or more determined selected weights;
wherein the determining the one or more selected weights of the one or more candidate graphics and the selecting the target graphic according to the one or more determined selected weights comprises:
determining, for each one of the one or more candidate graphics, a selected weight of the candidate graphic, determining, according to the selected weight of each candidate graphic, that at least one candidate graphic is the target graphic, and selecting the target graphic;
wherein the determining, according to the selected weight of each candidate graphic, that the at least one candidate graphic is the target graphic comprises:
selecting, in response to determining that there are a plurality of candidate graphics with a largest selected weight, according to at least one of creation times or areas of the plurality of candidate graphics with the largest selected weight, one from the plurality of candidate graphics with the largest selected weight as the target graphic;
wherein the selecting, in response to determining that there are the plurality of candidate graphics with the largest selected weight, according to at least one of creation times or areas of the plurality of candidate graphics with the largest selected weight, one from the plurality of candidate graphics with the largest selected weight as the target graphic, comprises one of:
selecting, in a case that the plurality of candidate graphics with the largest selected weight are closed graphics of a same type, a candidate graphic with a smallest area as the target graphic; and selecting, in a case that the plurality of candidate graphics with the largest selected weight are not closed graphics of the same type or comprise a non-closed graphic, a candidate graphic with a creation time being closest to the current time as the target graphic; and
selecting, in a case that the plurality of candidate graphics with the largest selected weight are all closed graphics, a candidate graphic with a smallest area as the target graphic; and selecting, in a case that the plurality of candidate graphics with the largest selected weight comprise a non-closed graphic, a candidate graphic with a creation time being closest to the current time as the target graphic.

2. The method according to claim 1, wherein the determining (102), according to the triggering position, the one or more corresponding candidate graphics comprises at least one of:
for a closed graphic, determining, in a case that the triggering position meets any one of being inside the closed graphic, on a line or at an end point of the closed graphic, that the closed graphic is a candidate graphic; or
for a non-closed graphic, determining, in a case that the triggering position meets being on a line or at an end point of the non-closed graphic, that the non-closed graphic is a candidate graphic.

3. The method according to claim 1, wherein the determining the one or more selected weights of the one or more candidate graphics comprises:
for any one of the one or more candidate graphics, determining a selected weight of the candidate graphic according to at least one of a graphic weight or a position weight of the candidate graphic;
wherein the graphic weight is determined according to a graphic type of the candidate graphic, and the position weight is determined according to a position relationship between the candidate graphic and the triggering position.

4. The method according to claim 3, wherein the position weight is determined through:
determining, in a case that the position relationship indicates that the triggering position is on a line of the candidate graphic, from a predetermined correspondence between graphics and position weights, that a position weight corresponding to the line of the candidate graphic is the position weight of the candidate graphic.

5. The method according to claim 3, wherein the position weight is determined through:
determining, in a case that the position relationship indicates that the triggering position is at an end point of the candidate graphic, from the predetermined correspondence between graphics and position weights, that a position weight corresponding to the end point of the candidate graphic is the position weight of the candidate graphic.

6. The method according to claim 3, wherein the position weight is determined through:
calculating, in a case that the position relationship indicates that the triggering position is within a graphic region of the candidate graphic, a shortest straight-line distance from the triggering position to a target edge of the candidate graphic, wherein the target edge is an edge of the candidate graphic closest to the triggering position; and determining, according to the graphic weight and the shortest straight-line distance, the position weight of the candidate graphic.

7. The method according to claim 3, wherein the graphic weight is pre-configured, the graphic type comprises a point, a line and a closed graphic, a graphic weight of the point is highest, a graphic weight of the line is second highest and a graphic weight of the closed graphic is lowest.

8. The method according to claim 3, wherein the graphic weight is automatically configured by an electronic device based on user's historical graphic selection records, and
wherein automatically configuring the graphic weight based on the user's historical graphic selection records comprises:
counting periodically, for each of various graphic types, a number of times of the graphic type being selected in the present period; and
determining, according to numbers of times of various graphic types being selected, graphic weights of the various graphic types.

9. The method according to claim 3, wherein the position weight is pre-configured, and the position relationship comprises that the triggering position is on a line, at an end point of the candidate graphic, a position weight corresponding to the end point is greater than a position weight corresponding to the line.

10. The method according to claim 3, wherein the position weight is acquired by an electronic device performing counting based on user's historical graphic selection records, and
wherein acquiring the position weight by performing counting based on the historical graphic selection records comprises:
counting periodically, a number of times that a triggering position is at an end point of a graphic, and a number of times that a triggering position is on a line of a graphic; and
determining, according to the counted numbers of times, position weights of a triggering position being at an end point and on a line.

11. An electronic device comprising:
a readable storage medium (603), configured to store machine executable instructions; and
a processor (602), configured to read the machine executable instructions on the readable storage medium, and execute the instructions to perform the method according to any one of claims 1 to 10.

12. A computer readable storage medium wherein the computer readable storage medium has a computer program stored thereon, and the computer program is executed by a processor to implement the method according to any one of claims 1 to 10.

13. A computer program, being stored in a machine-readable storage medium, wherein, when the computer program is executed by a processor, the processor is caused to implement the method according to any one of claims 1 to 10.

## Patentansprüche

1. Verfahren zum Auswählen eines grafischen Elements auf einer Anzeigeschnittstelle, das von einer elektronischen Vorrichtung ausgeführt wird, umfassend:
als Reaktion auf das Detektieren eines Auslöseereignisses Bestimmen (101) einer dem Auslöseereignis entsprechenden Auslöseposition zum Auslösen der Auswahl eines grafischen Elements; wobei das Auslöseereignis eine Klickoperation umfasst, die von einem Benutzer mittels einer Maus auf der Anzeigeschnittstelle der elektronischen Vorrichtung ausgeführt wird;
Bestimmen (102) eines oder mehrerer entsprechender grafischer Kandidatenelemente gemäß der Auslöseposition;
Bestimmen (103) eines oder mehrerer Auswahlgewichte des einen oder der mehreren grafischen Kandidatenelemente; und
Auswählen (103) eines grafischen Zielelements gemäß dem einen oder den mehreren bestimmten Auswahlgewichten;
wobei das Bestimmen des einen oder der mehreren Auswahlgewichte des einen oder der mehreren grafischen Kandidatenelemente und das Auswählen des grafischen Zielelements gemäß dem einen oder den mehreren bestimmten Auswahlgewichten umfasst:
Bestimmen, für jedes der einen oder der mehreren grafischen Kandidatenelemente, eines Auswahlgewichts des grafischen Kandidatenelements, Bestimmen gemäß dem Auswahlgewicht jedes grafischen Kandidatenelements, dass mindestens ein grafisches Kandidatenelement das grafische Zielelement ist, und Auswählen des grafischen Zielelements;
wobei das Bestimmen gemäß dem Auswahlgewicht jedes grafischen Kandidatenelements, dass das mindestens eine grafische Kandidatenelement das grafische Zielelement ist, umfasst:
als Reaktion auf das Bestimmen, dass mehrere grafische Kandidatenelemente mit einem größten Auswahlgewicht vorhanden sind, Auswählen eines der mehreren grafischen Kandidatenelemente mit dem größten Auswahlgewicht als das grafische Zielelement gemäß mindestens einem von Erstellungszeitpunkten oder Flächeninhalten der mehreren grafischen Kandidatenelemente mit dem größten Auswahlgewicht;
wobei das Auswählen, als Reaktion auf das Bestimmen, dass die mehreren grafischen Kandidatenelemente mit dem größten Auswahlgewicht vorhanden sind, eines der mehreren grafischen Kandidatenelemente mit dem größten Auswahlgewicht als das grafische Zielelement gemäß mindestens einem von Erstellungszeitpunkten oder Flächeninhalten der mehreren grafischen Kandidatenelemente mit dem größten Auswahlgewicht eines der Folgenden umfasst:
Auswählen, falls die mehreren grafischen Kandidatenelemente mit dem größten Auswahlgewicht geschlossene grafische Elemente desselben Typs sind, eines grafischen Kandidatenelements mit dem kleinsten Flächeninhalt als das grafische Zielelement; und Auswählen, falls die mehreren grafischen Kandidatenelemente mit dem größten Auswahlgewicht keine geschlossenen grafischen Elemente desselben Typs sind oder ein nicht geschlossenes grafisches Element umfassen, eines grafischen Kandidatenelements mit einem Erstellungszeitpunkt, der dem aktuellen Zeitpunkt am nächsten liegt, als das grafische Zielelement; und
Auswählen, falls die mehreren grafischen Kandidatenelemente mit dem größten Auswahlgewicht sämtlich geschlossene grafische Elemente sind, eines grafischen Kandidatenelements mit dem kleinsten Flächeninhalt als das grafische Zielelement; und Auswählen, falls die mehreren grafischen Kandidatenelemente mit dem größten Auswahlgewicht ein nicht geschlossenes grafisches Element umfassen, eines grafischen Kandidatenelements mit einem Erstellungszeitpunkt, der dem aktuellen Zeitpunkt am nächsten liegt, als das grafische Zielelement.

2. Verfahren nach Anspruch 1, wobei das Bestimmen (102) des einen oder der mehreren entsprechenden grafischen Kandidatenelemente gemäß der Auslöseposition mindestens eines der Folgenden umfasst:
für ein geschlossenes grafisches Element Bestimmen, falls die Auslöseposition eine der Bedingungen erfüllt, innerhalb des geschlossenen grafischen Elements, auf einer Linie oder an einem Endpunkt des geschlossenen grafischen Elements zu liegen, dass das geschlossene grafische Element ein grafisches Kandidatenelement ist; oder
für ein nicht geschlossenes grafisches Element Bestimmen, falls die Auslöseposition die Bedingung erfüllt, auf einer Linie oder an einem Endpunkt des nicht geschlossenen grafischen Elements zu liegen, dass das nicht geschlossene grafische Element ein grafisches Kandidatenelement ist.

3. Verfahren nach Anspruch 1, wobei das Bestimmen des einen oder der mehreren Auswahlgewichte des einen oder der mehreren grafischen Kandidatenelemente umfasst:
für ein beliebiges der einen oder der mehreren grafischen Kandidatenelemente Bestimmen eines Auswahlgewichts des grafischen Kandidatenelements gemäß mindestens einem von einem Grafikgewicht oder einem Positionsgewicht des grafischen Kandidatenelements;
wobei das Grafikgewicht gemäß einem Grafiktyp des grafischen Kandidatenelements bestimmt wird und das Positionsgewicht gemäß einer Positionsbeziehung zwischen dem grafischen Kandidatenelement und der Auslöseposition bestimmt wird.

4. Verfahren nach Anspruch 3, wobei das Positionsgewicht bestimmt wird durch:
Bestimmen, falls die Positionsbeziehung angibt, dass die Auslöseposition auf einer Linie des grafischen Kandidatenelements liegt, anhand einer vorbestimmten Zuordnung zwischen grafischen Elementen und Positionsgewichten, dass ein der Linie des grafischen Kandidatenelements entsprechendes Positionsgewicht das Positionsgewicht des grafischen Kandidatenelements ist.

5. Verfahren nach Anspruch 3, wobei das Positionsgewicht bestimmt wird durch:
Bestimmen, falls die Positionsbeziehung angibt, dass die Auslöseposition an einem Endpunkt des grafischen Kandidatenelements liegt, anhand der vorbestimmten Zuordnung zwischen grafischen Elementen und Positionsgewichten, dass ein dem Endpunkt des grafischen Kandidatenelements entsprechendes Positionsgewicht das Positionsgewicht des grafischen Kandidatenelements ist.

6. Verfahren nach Anspruch 3, wobei das Positionsgewicht bestimmt wird durch:
Berechnen, falls die Positionsbeziehung angibt, dass die Auslöseposition innerhalb eines Grafikbereichs des grafischen Kandidatenelements liegt, eines kürzesten geradlinigen Abstands von der Auslöseposition zu einer Zielkante des grafischen Kandidatenelements, wobei die Zielkante eine der Auslöseposition am nächsten liegende Kante des grafischen Kandidatenelements ist; und Bestimmen des Positionsgewichts des grafischen Kandidatenelements gemäß dem Grafikgewicht und dem kürzesten geradlinigen Abstand.

7. Verfahren nach Anspruch 3, wobei das Grafikgewicht vorkonfiguriert ist, der Grafiktyp einen Punkt, eine Linie und ein geschlossenes grafisches Element umfasst, ein Grafikgewicht des Punkts am höchsten ist, ein Grafikgewicht der Linie am zweithöchsten ist und ein Grafikgewicht des geschlossenen grafischen Elements am niedrigsten ist.

8. Verfahren nach Anspruch 3, wobei das Grafikgewicht von einer elektronischen Vorrichtung auf Grundlage historischer Aufzeichnungen der Auswahl grafischer Elemente durch einen Benutzer automatisch konfiguriert wird, und
wobei das automatische Konfigurieren des Grafikgewichts auf Grundlage der historischen Aufzeichnungen der Auswahl grafischer Elemente durch den Benutzer umfasst:
periodisches Zählen, für jeden von verschiedenen Grafiktypen, wie oft der Grafiktyp im aktuellen Zeitraum ausgewählt wird; und
Bestimmen von Grafikgewichten der verschiedenen Grafiktypen gemäß der Anzahl, wie oft die verschiedenen Grafiktypen ausgewählt werden.

9. Verfahren nach Anspruch 3, wobei das Positionsgewicht vorkonfiguriert ist und die Positionsbeziehung umfasst, dass die Auslöseposition auf einer Linie oder an einem Endpunkt des grafischen Kandidatenelements liegt, wobei ein dem Endpunkt entsprechendes Positionsgewicht größer als ein der Linie entsprechendes Positionsgewicht ist.

10. Verfahren nach Anspruch 3, wobei das Positionsgewicht dadurch erhalten wird, dass eine elektronische Vorrichtung eine Zählung auf Grundlage historischer Aufzeichnungen der Auswahl grafischer Elemente durch einen Benutzer durchführt, und
wobei das Erhalten des Positionsgewichts durch Durchführen einer Zählung auf Grundlage der historischen Aufzeichnungen der Auswahl grafischer Elemente umfasst:
periodisches Zählen, wie oft eine Auslöseposition an einem Endpunkt eines grafischen Elements liegt und wie oft eine Auslöseposition auf einer Linie eines grafischen Elements liegt; und
Bestimmen von Positionsgewichten dafür, dass eine Auslöseposition an einem Endpunkt bzw. auf einer Linie liegt, gemäß den gezählten Anzahlen.

11. Elektronische Vorrichtung, umfassend:
ein lesbares Speichermedium (603), das dazu ausgelegt ist, maschinenausführbare Anweisungen zu speichern; und
einen Prozessor (602), der dazu ausgelegt ist, die maschinenausführbaren Anweisungen auf dem lesbaren Speichermedium zu lesen und die Anweisungen auszuführen, um das Verfahren nach einem der Ansprüche 1 bis 10 durchzuführen.

12. Computerlesbares Speichermedium, wobei auf dem computerlesbaren Speichermedium ein Computerprogramm gespeichert ist und das Computerprogramm von einem Prozessor ausgeführt wird, um das Verfahren nach einem der Ansprüche 1 bis 10 zu implementieren.

13. Computerprogramm, das in einem maschinenlesbaren Speichermedium gespeichert ist, wobei die Ausführung des Computerprogramms durch einen Prozessor bewirkt, dass der Prozessor das Verfahren nach einem der Ansprüche 1 bis 10 implementiert.

## Revendications

1. Procédé de sélection d'un élément graphique sur une interface d'affichage, exécuté par un dispositif électronique, comprenant :
en réponse à la détection d'un événement de déclenchement, la détermination (101) d'une position de déclenchement correspondant à l'événement de déclenchement pour déclencher la sélection d'un élément graphique ; dans lequel l'événement de déclenchement comprend une opération de clic effectuée par un utilisateur sur l'interface d'affichage du dispositif électronique au moyen d'une souris ;
la détermination (102), selon la position de déclenchement, d'un ou de plusieurs éléments graphiques candidats correspondants ;
la détermination (103) d'un ou de plusieurs poids de sélection desdits un ou plusieurs éléments graphiques candidats ; et
la sélection (103) d'un élément graphique cible selon lesdits un ou plusieurs poids de sélection déterminés ;
dans lequel la détermination desdits un ou plusieurs poids de sélection desdits un ou plusieurs éléments graphiques candidats et la sélection de l'élément graphique cible selon lesdits un ou plusieurs poids de sélection déterminés comprennent :
la détermination, pour chacun desdits un ou plusieurs éléments graphiques candidats, d'un poids de sélection de l'élément graphique candidat, la détermination, selon le poids de sélection de chaque élément graphique candidat, qu'au moins un élément graphique candidat est l'élément graphique cible, et la sélection de l'élément graphique cible ;
dans lequel la détermination, selon le poids de sélection de chaque élément graphique candidat, que ledit au moins un élément graphique candidat est l'élément graphique cible comprend :
en réponse à la détermination qu'il existe une pluralité d'éléments graphiques candidats ayant un poids de sélection maximal, la sélection, selon au moins l'un parmi les instants de création ou les surfaces de la pluralité d'éléments graphiques candidats ayant le poids de sélection maximal, de l'un de la pluralité d'éléments graphiques candidats ayant le poids de sélection maximal en tant qu'élément graphique cible ;
dans lequel la sélection, en réponse à la détermination qu'il existe la pluralité d'éléments graphiques candidats ayant le poids de sélection maximal, selon au moins l'un parmi les instants de création ou les surfaces de la pluralité d'éléments graphiques candidats ayant le poids de sélection maximal, de l'un de la pluralité d'éléments graphiques candidats ayant le poids de sélection maximal en tant qu'élément graphique cible comprend l'une des options suivantes :
la sélection, lorsque la pluralité d'éléments graphiques candidats ayant le poids de sélection maximal sont des éléments graphiques fermés d'un même type, d'un élément graphique candidat ayant la plus petite surface en tant qu'élément graphique cible ; et la sélection, lorsque la pluralité d'éléments graphiques candidats ayant le poids de sélection maximal ne sont pas des éléments graphiques fermés du même type ou comprennent un élément graphique non fermé, d'un élément graphique candidat dont l'instant de création est le plus proche de l'instant actuel en tant qu'élément graphique cible ; et
la sélection, lorsque la pluralité d'éléments graphiques candidats ayant le poids de sélection maximal sont tous des éléments graphiques fermés, d'un élément graphique candidat ayant la plus petite surface en tant qu'élément graphique cible ; et la sélection, lorsque la pluralité d'éléments graphiques candidats ayant le poids de sélection maximal comprennent un élément graphique non fermé, d'un élément graphique candidat dont l'instant de création est le plus proche de l'instant actuel en tant qu'élément graphique cible.

2. Procédé selon la revendication 1, dans lequel la détermination (102), selon la position de déclenchement, desdits un ou plusieurs éléments graphiques candidats correspondants comprend au moins l'une des opérations suivantes :
pour un élément graphique fermé, la détermination, lorsque la position de déclenchement satisfait à l'une quelconque des conditions consistant à se trouver à l'intérieur de l'élément graphique fermé, sur une ligne ou à une extrémité de l'élément graphique fermé, que l'élément graphique fermé est un élément graphique candidat ; ou
pour un élément graphique non fermé, la détermination, lorsque la position de déclenchement satisfait à la condition consistant à se trouver sur une ligne ou à une extrémité de l'élément graphique non fermé, que l'élément graphique non fermé est un élément graphique candidat.

3. Procédé selon la revendication 1, dans lequel la détermination desdits un ou plusieurs poids de sélection desdits un ou plusieurs éléments graphiques candidats comprend :
pour l'un quelconque desdits un ou plusieurs éléments graphiques candidats, la détermination d'un poids de sélection de l'élément graphique candidat selon au moins l'un parmi un poids graphique ou un poids de position de l'élément graphique candidat ;
dans lequel le poids graphique est déterminé selon un type graphique de l'élément graphique candidat, et le poids de position est déterminé selon une relation de position entre l'élément graphique candidat et la position de déclenchement.

4. Procédé selon la revendication 3, dans lequel le poids de position est déterminé par :
la détermination, lorsque la relation de position indique que la position de déclenchement se trouve sur une ligne de l'élément graphique candidat, à partir d'une correspondance prédéterminée entre des éléments graphiques et des poids de position, qu'un poids de position correspondant à la ligne de l'élément graphique candidat est le poids de position de l'élément graphique candidat.

5. Procédé selon la revendication 3, dans lequel le poids de position est déterminé par :
la détermination, lorsque la relation de position indique que la position de déclenchement se trouve à une extrémité de l'élément graphique candidat, à partir de la correspondance prédéterminée entre des éléments graphiques et des poids de position, qu'un poids de position correspondant à l'extrémité de l'élément graphique candidat est le poids de position de l'élément graphique candidat.

6. Procédé selon la revendication 3, dans lequel le poids de position est déterminé par :
le calcul, lorsque la relation de position indique que la position de déclenchement se trouve à l'intérieur d'une région graphique de l'élément graphique candidat, d'une plus courte distance en ligne droite entre la position de déclenchement et un bord cible de l'élément graphique candidat, dans lequel le bord cible est un bord de l'élément graphique candidat le plus proche de la position de déclenchement ; et la détermination du poids de position de l'élément graphique candidat selon le poids graphique et la plus courte distance en ligne droite.

7. Procédé selon la revendication 3, dans lequel le poids graphique est préconfiguré, le type graphique comprend un point, une ligne et un élément graphique fermé, un poids graphique du point est le plus élevé, un poids graphique de la ligne est le deuxième plus élevé et un poids graphique de l'élément graphique fermé est le plus faible.

8. Procédé selon la revendication 3, dans lequel le poids graphique est automatiquement configuré par un dispositif électronique sur la base d'enregistrements historiques de sélection d'éléments graphiques de l'utilisateur, et
dans lequel la configuration automatique du poids graphique sur la base des enregistrements historiques de sélection d'éléments graphiques de l'utilisateur comprend :
le comptage périodique, pour chacun de divers types graphiques, d'un nombre de fois où le type graphique est sélectionné pendant la période actuelle ; et
la détermination, selon les nombres de fois où les divers types graphiques sont sélectionnés, de poids graphiques des divers types graphiques.

9. Procédé selon la revendication 3, dans lequel le poids de position est préconfiguré, et la relation de position comprend le fait que la position de déclenchement se trouve sur une ligne ou à une extrémité de l'élément graphique candidat, un poids de position correspondant à l'extrémité étant supérieur à un poids de position correspondant à la ligne.

10. Procédé selon la revendication 3, dans lequel le poids de position est acquis par un dispositif électronique effectuant un comptage sur la base d'enregistrements historiques de sélection d'éléments graphiques de l'utilisateur, et
dans lequel l'acquisition du poids de position par réalisation d'un comptage sur la base des enregistrements historiques de sélection d'éléments graphiques comprend :
le comptage périodique d'un nombre de fois où une position de déclenchement se trouve à une extrémité d'un élément graphique et d'un nombre de fois où une position de déclenchement se trouve sur une ligne d'un élément graphique ; et
la détermination, selon les nombres de fois comptés, de poids de position correspondant au fait qu'une position de déclenchement se trouve à une extrémité et sur une ligne.

11. Dispositif électronique comprenant :
un support de stockage lisible (603), configuré pour stocker des instructions exécutables par machine ; et
un processeur (602), configuré pour lire les instructions exécutables par machine sur le support de stockage lisible et exécuter les instructions afin de mettre en œuvre le procédé selon l'une quelconque des revendications 1 à 10.

12. Support de stockage lisible par ordinateur, dans lequel un programme informatique est stocké sur le support de stockage lisible par ordinateur, et le programme informatique est exécuté par un processeur afin de mettre en œuvre le procédé selon l'une quelconque des revendications 1 à 10.

13. Programme informatique stocké dans un support de stockage lisible par machine, dans lequel, lorsque le programme informatique est exécuté par un processeur, le processeur est amené à mettre en œuvre le procédé selon l'une quelconque des revendications 1 à 10.
